(19) Europäisches Patentamt
European Patent Office
Office européen des brevets

(11) **EP 2 907 217 B1**

(12) **FASCICULE DE BREVET EUROPEEN**

(45) Date de publication et mention
de la délivrance du brevet:
**06.12.2017 Bulletin 2017/49**

(51) Int Cl.:
***H02J 7/00*** *(2006.01)* ***B60L 11/18*** *(2006.01)*

(21) Numéro de dépôt: **13782787.9**

(22) Date de dépôt: **03.10.2013**

(86) Numéro de dépôt international:
**PCT/FR2013/052351**

(87) Numéro de publication internationale:
**WO 2014/057192 (17.04.2014 Gazette 2014/16)**

(54) **STRUCTURE POUR LA MODULATION DE TENSION D'UNE BATTERIE ET SON ÉQUILIBRAGE ACTIF**

STRUKTUR ZUR MODULATION EINER BATTERIESPANNUNG UND AKTIVE ÄQUILIBRIERUNG DAVON

STRUCTURE FOR MODULATING THE VOLTAGE OF A BATTERY AND THE ACTIVE EQUILIBRATION THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.10.2012 FR 1202718**

(43) Date de publication de la demande:
**19.08.2015 Bulletin 2015/34**

(73) Titulaire: **Renault S.A.S.**
**92100 Boulogne-Billancourt (FR)**

(72) Inventeurs:
• **GAGNEUR, Laurent**
**69006 Lyon (FR)**
• **KVIESKA, Pedro**
**78000 Versailles (FR)**
• **MERIENNE, Ludovic**
**91190 Gif-Sur-Yvette (FR)**
• **DRIEMEYER-FRANCO, Ana-Lucia**
**78180 Montigny-le-Bretonneux (FR)**

(56) Documents cités:
EP-A1- 1 947 752          WO-A1-2011/132302
JP-A- H11 215 695         JP-A- 2002 291 165
US-A1- 2011 001 456

**Description**

DOMAINE TECHNIQUE AUQUEL SE RAPPORTE L'INVENTION

La présente invention concerne de manière générale les véhicules automobiles à propulsion électrique
ou hybride.

Elle concerne plus particulièrement une batterie
d'accumulateurs comportant une pluralité de cellules de
stockage d'énergie électrique et un réseau électrique qui
connecte lesdites cellules entre elles.

Elle concerne également un procédé de pilotage des composants électroniques du réseau électrique
de cette batterie d'accumulateurs.

ARRIERE-PLAN TECHNOLOGIQUE

Les véhicules automobiles à propulsion électrique sont généralement équipés d'un moteur électrique
et d'une batterie d'accumulateurs dédiée à l'alimentation
en courant de ce moteur électrique et de divers organes
auxiliaires connectés au réseau dit « haute tension ».

Une telle batterie, communément appelée
« batterie de traction », comporte de manière usuelle un
boîtier qui loge une pluralité de cellules d'accumulateurs,
dont le nombre est calculé de telle sorte que le moteur
électrique puisse développer un couple et une puissance
suffisants pour propulser le véhicule pendant une durée
prédéterminée.

Chaque cellule présente habituellement une
tension à ses bornes de l'ordre de 2 à 5 V. Ces cellules
sont alors connectées en série pour atteindre le niveau
de tension requis par l'application. La tension mesurée
aux bornes de la batterie de traction peut ainsi atteindre
400 V.

On constate toutefois qu'en fonction de l'état de
charge des cellules, cette tension peut chuter jusqu'en-
deçà de 300 V. Or, plus la tension baisse, plus le rendement du moteur électrique pour certaines puissances diminue. On remarque aussi que lorsque la tension baisse,
pour une puissance donnée, le rendement de la charge
de la batterie d'accumulateurs sera dégradé car le courant de charge sera de plus forte amplitude (que cette
charge soit exécutée à l'arrêt, par un chargeur dédié, ou
en cours de roulage, par un moyen de récupération
d'énergie au freinage).

On observe par ailleurs que les cellules de la
batterie de traction ne présentent pas toutes les mêmes
états de charge (on parle de « problème d'équilibrage
des cellules ») du fait qu'elles ne sont pas toutes rigoureusement identiques (leurs capacités et leurs résistances internes ne sont pas exactement égales à leur sortie
d'usine et n'évoluent pas de la même façon dans le
temps) et qu'elles sont placées dans le boîtier de la batterie en des zones plus ou moins bien refroidies.

Ainsi, certaines des cellules de la batterie de
traction subissent des contraintes plus grandes que d'autres, ce qui réduit la capacité globale de la batterie
de traction, ainsi que la durée de vie de cette batterie.
WO2011/132302 divulgue une batterie d'accumulateurs
selon le préambule de la revendication 1.

OBJET DE L'INVENTION

La présente invention propose alors une nouvelle architecture de batterie d'accumulateurs dans laquelle les cellules sont connectées de manière à obvier
aux problèmes d'équilibrage des cellules, de baisse du
rendement du moteur électrique et du chargeur.

Plus particulièrement, on propose selon l'invention une batterie d'accumulateurs telle que définie dans
l'introduction, dans laquelle il est en plus prévu que les
cellules soient regroupées par cellules-composites d'un
nombre pair de cellules, que les cellules-composites
soient connectées en série les unes avec les autres, et
que le réseau électrique comporte des moyens de connexion des cellules de chaque cellule-composite en parallèle ou en série, et des moyens de pilotage desdits
moyens de connexion, qui sont adaptés à connecter les
cellules de chaque cellule-composite en parallèle et en
série.

Ainsi, grâce à l'invention, il est possible de connecter les cellules de chaque cellule-composite, au
choix, en série ou en parallèle, pour ajuster la tension
aux bornes de la batterie à une tension désirée.

En pratique, cette tension désirée est celle qui
assure un rendement maximum au moteur électrique ou
au chargeur de batterie.

Par ailleurs, grâce à l'architecture de la batterie,
il est possible d'alterner régulièrement les cellules-composites dans lesquelles les cellules sont connectées en
série avec celles dans lesquelles les cellules sont connectées en parallèle, pour rééquilibrer les charges des
cellules, au bénéfice de la durée de vie de la batterie
d'accumulateurs et de l'autonomie du véhicule.

D'autres caractéristiques avantageuses et non
limitatives de la batterie d'accumulateurs conforme à l'invention sont les suivantes :

-   lesdits moyens de connexion comportent, dans chaque cellule-composite, trois interrupteurs ;
-   chaque cellule-composite comporte deux branches
    identiques, chacune composée d'au moins une cellule;
-   les moyens de connexion sont adaptés à connecter
    les deux branches en série ou en parallèle ;
-   les cellules-composites sont toutes identiques ;
-   le réseau électrique comporte des moyens d'acquisition de la tension et du courant, permettant de déduire l'état de charge et/ou de la capacité de chaque
    cellule-composite et/ou de chaque cellule ;
-   il est prévu un boîtier externe duquel émergent deux
    bornes de connexion, et les cellules-composites
    sont connectées en série entre lesdites deux bornes
    de connexion.

L'invention propose également un procédé de pilotage des moyens de connexion d'une telle batterie d'accumulateurs, comportant des étapes :

- d'acquisition d'au moins un paramètre de fonctionnement d'un chargeur de batterie ou d'un moteur électrique connecté à la batterie d'accumulateurs,
- de déduction, en fonction dudit paramètre de fonctionnement, d'une tension optimale à délivrer aux bornes de la batterie d'accumulateurs,
- d'acquisition des tensions instantanées aux bornes de chaque cellule-composite et/ou de chaque cellule de la batterie d'accumulateurs,
- de déduction, en fonction des tensions instantanées acquises, d'un paramètre d'état de charge de chaque cellule-composite,
- de déduction, en fonction de la tension optimale et des tensions instantanées acquises, du nombre « k » de cellules-composites où les cellules doivent être connectées en série pour que la tension aux bornes de la batterie d'accumulateurs soit sensiblement égale à la tension optimale,
- de détermination des « k » cellules-composites dont les paramètres d'état de charge sont les plus grands dans le cas d'une décharge de la batterie d'accumulateurs ou les plus petits dans le cas d'une charge de la batterie d'accumulateurs,
- de pilotage des moyens de connexion de ces « k » cellules-composites de manière à connecter leurs cellules en série, et
- de pilotage des moyens de connexion des cellules-composites restantes de manière à connecter leurs cellules en parallèle.

Avantageusement, à l'étape de déduction de la tension optimale, on recherche dans un registre de base de données dont chaque enregistrement associe une valeur déterminée dudit paramètre de fonctionnement à une tension optimale, un enregistrement correspondant au paramètre de fonctionnement acquis et on y lit la tension optimale associée.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une vue schématique d'une batterie d'accumulateurs selon l'invention ;
- les figures 2 et 3 sont des vues schématiques des cellules et du réseau électrique de la batterie d'accumulateurs de la figure 1, dans deux états différents.

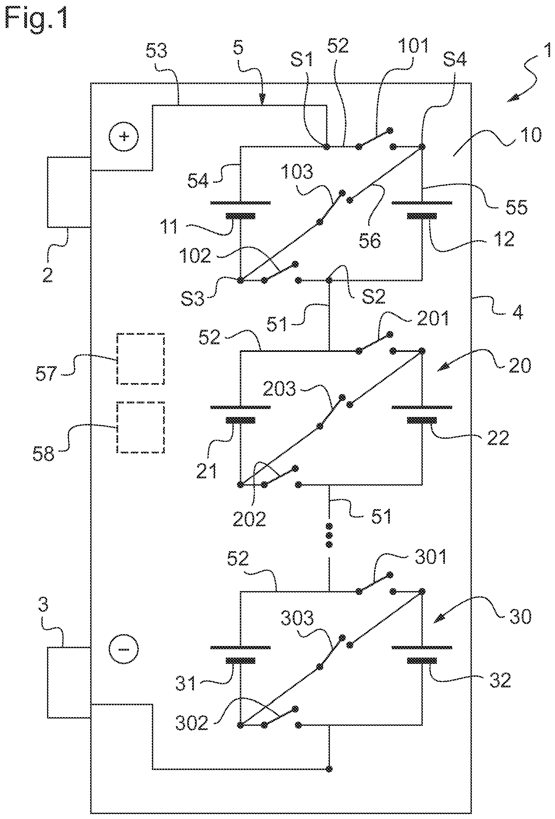

Sur la figure 1, on a représenté une batterie d'accumulateurs 1 pour véhicule automobile.

Le véhicule automobile, qui n'a pas été ici représenté, comporte un moteur électrique conçu pour propulser le véhicule automobile, et un chargeur électrique pour la recharge de la batterie d'accumulateurs 1.

Il pourrait également comporter des moyens de freinage récupératifs, permettant de récupérer l'énergie générée par le freinage du véhicule automobile afin de recharger la batterie d'accumulateurs 1.

La batterie d'accumulateurs est ici une batterie de traction 1 dédiée à l'alimentation en courant du moteur électrique et des divers organes auxiliaires connectés au réseau dit « haute tension » du véhicule.

Elle comporte classiquement un boîtier de stockage 4 duquel émergent une borne positive 2 et une négative 3.

Elle comporte également, à l'intérieur du boîtier de stockage 4, une pluralité de cellules 11, 12, 21, 22, 31, 32 de stockage d'énergie électrique et un réseau électrique 5 qui permet notamment de connecter ces cellules 11, 12, 21, 22, 31, 32 aux bornes négative 3 et positive 2.

Ici, ces cellules 11, 12, 21, 22, 31, 32 sont du type Lithium-ion. Une fois chargée, chacune de ces cellules présente une tension à ses bornes comprise entre 2 et 5 V.

Pour la clarté des dessins, on a seulement représenté sur les figures six de ces cellules 11, 12, 21, 22, 31, 32.

En pratique, la batterie de traction 1 en comportera un nombre N bien supérieur, choisi de telle sorte que le moteur électrique puisse développer un couple et une puissance suffisants pour propulser le véhicule pendant une durée prédéterminée.

Typiquement, on utilisera environ 200 cellules de manière que la tension aux bornes positive 2 et négative 3 de la batterie de traction 1 soit de l'ordre de 400 V et de capacité suffisante.

L'invention porte alors plus précisément sur la manière selon laquelle ces cellules 11, 12, 21, 22, 31, 32 sont connectées les unes aux autres.

Plus précisément, selon l'invention, les cellules 11, 12, 21, 22, 31, 32 sont réparties par cellules-composites 10, 20, 30 d'un nombre pair de cellules.

Le réseau électrique 5 comporte alors des conducteurs électriques 51 (tels que des fils électriques) qui connectent les cellules-composites 10, 20, 30 en série les unes avec les autres, entre les bornes positive 2 et négative 3.

Le réseau électrique 5 comporte par ailleurs, au sein de chaque cellule-composite 10, 20, 30, des moyens de connexion 52 adaptés à connecter les cellules 11, 12, 21, 22, 31, 32 de cette cellule-composite non seulement en série, mais également en parallèle.

Le réseau électrique 5 comporte alors en outre des moyens de pilotage 57 qui sont adaptés à piloter lesdits moyens de connexion 52 de manière à connecter les cellules 11, 12, 21, 22, 31, 32 de chaque cellule-composite 10, 20, 30, au choix, en parallèle ou en série.

Préférentiellement, les cellules-composites 10, 20, 30 sont toutes identiques.

Telles que représentées sur les figures, chacune de ces cellules-composites comporte exactement deux cellules.

Sur la figure 1, on a représenté un mode de réalisation préférentiel des moyens de connexion 52.

Si l'on considère sur cette figure 1 la première cellule-composite 10, on observe qu'elle comporte un point d'entrée S1 connecté à la borne positive 2 via un conducteur électrique 53 et un point de sortie S2 connecté à la seconde cellule-composite 20 par un fil électrique 51.

Les moyens de connexion 52 prévus dans cette cellule-composite 10 pour connecter les deux cellules 11, 12, au choix, en série ou en parallèle, comportent alors :

- une première branche 54 qui comprend des conducteurs électriques (tels que des fils électriques ou des pistes de circuit imprimé) pour respectivement connecter les deux bornes de la cellule 11 aux points d'entrée S1 et de sortie S2, et un interrupteur 102 connecté entre la cellule 11 et le point de sortie S2,
- une seconde branche 55 qui comprend des conducteurs électriques pour respectivement connecter les deux bornes de la cellule 12 aux points d'entrée S1 et de sortie S2, en parallèle de la première cellule 11, et un interrupteur 101 connecté entre le point d'entrée S1 et la cellule 12, et
- une troisième branche 56 qui comprend des conducteurs électriques pour connecter un point S3, situé entre la cellule 11 et le point de sortie S2, à un point S4, situé entre le point d'entrée S1 et la cellule 12, et qui comprend un interrupteur 103.

Chacun des trois interrupteurs 101, 102, 103, pouvant être par exemple du type MOSFET, et est donc pilotable entre un état passant et un état bloqué.

Les moyens de pilotage 57 sont alors conçus pour piloter les interrupteurs 101, 102, 103 de l'ensemble des cellules-composites 10, 20, 30.

Ils sont plus précisément conçus pour piloter les deux premiers interrupteurs 101, 102 de chaque cellule-composite 10, 20, 30 dans le même état (soit tous les deux passants, soit tous les deux bloqués), pour piloter le troisième interrupteur 103 dans l'état opposé et pour permettre éventuellement un changement d'état « à chaud », c'est-à-dire lorsqu'un courant traverse la batterie.

Ces moyens de pilotage sont ici formés par un microcontrôleur 57 qui comporte un microprocesseur (CPU), une mémoire vive (RAM), une mémoire morte (ROM), des convertisseurs analogiques-numériques, et différentes interfaces d'entrée et de sortie.

Les interfaces d'entrées permettent au microcontrôleur 57 d'acquérir des données relatives au moteur électrique, au chargeur et aux cellules de la batterie de traction 1, en vue de les stocker dans la mémoire vive.

Ces interfaces d'entrées sont à cet effet ici connectées à des moyens d'acquisition d'un paramètre de fonctionnement, notamment à un moyen d'acquisition de la vitesse de rotation w du moteur électrique, à un moyen d'acquisition de l'intensité maximale $I_{max}$ que le chargeur peut débiter, à un moyen d'acquisition de la tension individuelle $U_j$ aux bornes de chaque cellule de la batterie de traction 1, et à un moyen d'acquisition de l'intensité globale $I_{bat}$ débitée ou reçue par la batterie de traction 1. De préférence, les moyens d'acquisition d'un paramètre de fonctionnement comprennent au moins un moyen d'acquisition de l'intensité maximale que le chargeur peut débiter ou un moyen d'acquisition de la vitesse de rotation instantanée du moteur.

Le processeur est quant à lui apte à exécuter différents programmes mémorisés dans la mémoire morte.

Il est notamment adapté à exécuter un programme de calcul de la capacité individuelle $Q_j$ de chaque cellule 11, 12, 21, 22, 31, 32 en fonction de la tension individuelle $U_j$ aux bornes de cette cellule et en fonction de l'intensité $I_{bat}$.

Ce programme pourra par exemple se baser sur un algorithme de capteur logiciel du type filtre de Kalman.

La mémoire morte du microcontrôleur 57 mémorise en outre deux registres de base de données.

Le premier registre comprend une pluralité d'enregistrements qui associent chacun une gamme de vitesses de rotation w et de courants du moteur électrique à une tension optimale $U_{opt}$ qui, lorsqu'elle est atteinte, assure un rendement optimal du moteur électrique à ces vitesses de rotation.

Le second registre comprend une pluralité d'enregistrements qui associent chacun une gamme d'intensités maximum $I_{max}$ que le chargeur peut débiter ainsi que des limitations hardware à une tension optimale $U_{opt}$ qui, lorsqu'elle est atteinte, assure un rendement optimal de la charge de la batterie de traction 1.

Les interfaces de sortie du microcontrôleur 57 sont quant à elles connectées aux interrupteurs 101, 102, 103 pour les piloter à l'état passant ou bloqué.

Le microcontrôleur 57 est alors adapté à piloter les interrupteurs 101, 102, 103 de chaque cellule-composite 10, 20, 30 de manière à connecter les cellules de cette cellule-composite en parallèle ou en série.

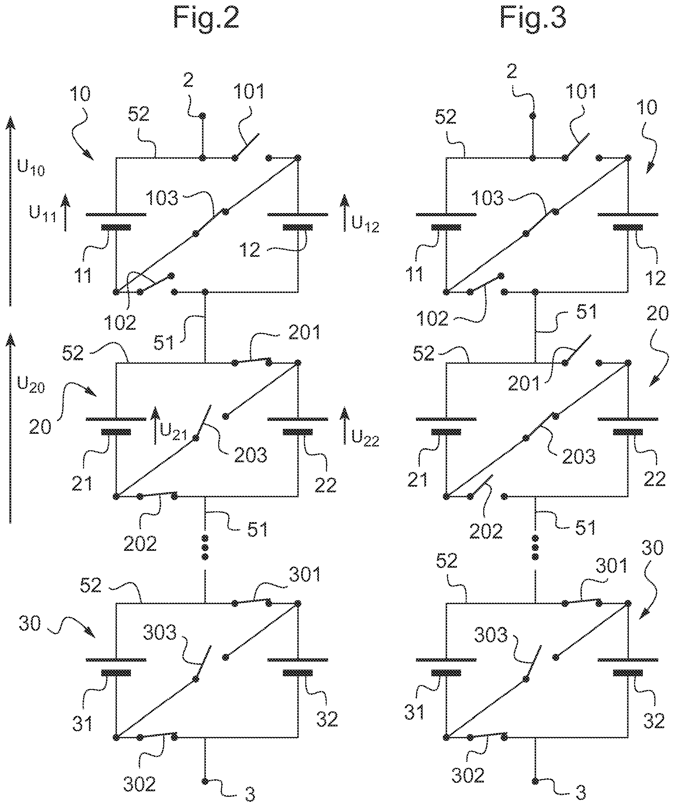

Comme le montre la première cellule-composite 10 sur la figure 2, le microcontrôleur 57 peut ainsi piloter les interrupteurs 101, 102 à l'état bloqué et l'interrupteur 103 à l'état passant, de manière que les deux cellules 11, 12 se trouvent connectées en série.

Alors, la tension globale $U_{10}$ aux bornes de la cellule-composite 10 sera égale à la somme des tensions individuelles $U_{11}$, $U_{12}$ aux bornes des deux cellules 11, 12.

La capacité globale $Q_{10}$ de la cellule-composite 10 sera quant à elle égale à la capacité minimale des capacités individuelles $Q_{11}$, $Q_{12}$ des deux cellules 11, 12.

Comme le montre la seconde cellule-composite 20 sur la figure 2, le microcontrôleur 57 peut sinon piloter les interrupteurs 201, 202 à l'état passant et l'interrupteur 203 à l'état bloqué, de manière que les deux cellules 21, 22 se trouvent connectées en parallèle.

Alors, la tension globale $U_{20}$ aux bornes de la cellule-composite 20 sera égale aux tensions individuelles $U_{21}$, $U_{22}$ aux bornes des deux cellules 21, 22.

La capacité globale $Q_{20}$ de la cellule-composite 20 sera quant à elle égale à la somme des capacités individuelles $Q_{21}$, $Q_{22}$ des deux cellules 21, 22.

Le microcontrôleur 57 est alors programmé pour maintenir la tension $U_{bat}$ aux bornes de la batterie de traction 1 égale à la tension optimale $U_{opt}$, afin d'assurer au moteur électrique ou au chargeur un rendement optimal.

Il est également programmé pour maintenir les états de charge des différentes cellules au même niveau, afin d'éviter tout déséquilibre entre les cellules qui serait néfaste à la durée de vie de la batterie de traction 1 et pour l'autonomie du véhicule.

Le microcontrôleur 57 met à cet effet en oeuvre le procédé suivant.

Au cours d'une première étape, le microcontrôleur 57 acquiert la tension optimale $U_{opt}$ que la batterie de traction 1 doit présenter à ses bornes.

Pour cela, il détermine tout d'abord si la batterie de traction 1 alimente le moteur électrique en courant, ou si elle est en charge.

Si la batterie de traction 1 alimente le moteur électrique, le microcontrôleur 57 acquiert la vitesse de rotation w et le courant du moteur électrique, puis il recherche dans le premier registre l'enregistrement dont la gamme de vitesses et de courant correspond à la vitesse de rotation w et au courant du moteur électrique acquis, et enfin il lit dans cet enregistrement la tension optimale $U_{opt}$ associée.

Au contraire, si la batterie de traction 1 est en charge, le microcontrôleur 57 acquiert l'intensité maximale $I_{max}$ que le chargeur peut débiter, puis il recherche dans le second registre l'enregistrement dont la gamme d'intensités correspond à l'intensité maximale $I_{max}$ acquise, et enfin il lit dans cet enregistrement la tension optimale $U_{opt}$ associée.

Au cours d'une seconde étape, le microcontrôleur 57 détermine l'état de charge individuel de chaque cellule 11, 12, 21, 22, 31, 32 de la batterie de traction 1.

Pour cela, il acquiert tout d'abord la tension individuelle $U_j$ aux bornes de chaque cellule 11, 12, 21, 22, 31, 32 ainsi que l'intensité globale $I_{bat}$.

Grâce au programme mémorisé à cet effet dans sa mémoire morte, le microcontrôleur 57 en déduit une approximation fine des états de charge individuels des cellules 11, 12, 21, 22, 31, 32 de la batterie de traction 1.

Au cours d'une troisième étape, le microcontrôleur 57 détermine le nombre k de cellules-composites dans lesquelles les cellules doivent être connectées en série pour que la tension $U_{bat}$ aux bornes de la batterie de traction 1 soit sensiblement égale à la tension optimale $U_{opt}$.

Le microcontrôleur 57 réalise ce calcul en fonction de la tension optimale $U_{opt}$ et des tensions individuelles $U_j$ acquises.

Au cours d'une quatrième étape, le microcontrôleur 57 sélectionne les k cellules-composites à connecter en série de manière préférentielle.

En cas de charge de la batterie d'accumulateurs, ces k cellules-composites sont celles dont les cellules présentent les états de charge individuels les plus faibles.

En cas de décharge de la batterie d'accumulateurs, ces k cellules-composites sont celles dont les cellules présentent les états de charge individuels les plus grands.

Puis, il pilote les interrupteurs de ces k cellules-composites pour connecter leurs cellules en série, les interrupteurs de cellules-composites restantes étant pilotés de manière à ce que leurs cellules restent connectées en parallèle.

Ces quatre étapes sont répétées en boucle, de telle sorte que la tension $U_{bat}$ aux bornes de la batterie de traction 1 reste égale à la tension optimale $U_{opt}$ même lorsque cette dernière varie.

Ainsi, comme le montre la figure 2, lorsque les capacités individuelles des cellules baissent ou lorsque la tension optimale augmente, il est possible de connecter un plus grand nombre de cellules en série.

La répétition en boucle de ces quatre étapes permet par ailleurs d'éviter que les k cellules-composites sélectionnées restent les mêmes et que les cellules de ces cellules-composites se déchargent plus vite. Au contraire, les k cellules-composites sélectionnées restent celles qui présentent les états de charge les plus extrêmes.

Ainsi, les cellules dont les états de charge se sont modifiés lorsqu'elles étaient connectées en série peuvent être connectées en parallèle, de sorte qu'elles sont moins sollicitées et qu'elles peuvent se ré-équilibrer au niveau des autres cellules de la batterie de traction 1.

La présente invention sera particulièrement profitable lorsque le chargeur utilisé sera du type de celui décrit dans le document FR 2 964 510.

Ce chargeur, que nous ne décrirons pas ici en détail, comporte :

- un étage de filtrage de type résistif-inductif-capacitif, raccordé à un réseau triphasé,
- un étage abaisseur de tension,
- un étage élévateur de tension, raccordé à la batterie de traction, et
- une bobine d'induction interposée entre l'étage abaisseur et l'étage élévateur de tension.

Pour des raisons de commande explicitées dans ledit document, le courant au point neutre (en sortie de l'étage abaisseur de tension) doit à tout instant être supérieur à l'intensité du courant du réseau électrique local triphasé et à l'intensité globale $I_{bat}$, avec une marge de sécurité.

Grâce à l'invention, il est possible de maintenir la tension globale $U_{bat}$ aux bornes de la batterie de traction 1 à une valeur élevée. A puissance égale, il est donc possible de diminuer l'intensité du courant $I_{bat}$ envoyé à la batterie. De ce fait, il est possible de diminuer l'intensité au point neutre, ce qui permet de réduire de façon significative les pertes électriques.

La présente invention sera également particulièrement profitable lorsque le moteur électrique utilisé sera du type synchrone.

Avec un tel moteur, la tension globale $U_{bat}$ aux bornes de la batterie de traction 1 définit un domaine de puissance que le moteur électrique va pouvoir fournir.

Dans le cas d'une machine synchrone à aimants, les équations qui régissent le fonctionnement du moteur électrique sont les suivantes :

$$V_d = R_s I_d + L_d \dot{I}_d - \omega_r L_q I_q$$

$$V_q = R_s I_q + L_q \dot{I}_q + \omega_r \left( L_d I_d + \Phi_f \right)$$

Où :

- $V_d$ et $V_q$ sont les tensions appliquées sur les 2 axes du plan de Park du moteur (en Volt),
- $I_d$ et $I_q$ sont les intensités du courant circulant dans le moteur sur les 2 axes du plan de Park (en Ampère),
- $R_s$ représente la résistance équivalente du stator du moteur (en Ohm),
- $L_d$ et $L_q$ sont les inductances sur chaque axe du moteur (en Henry),
- $\omega_r$ est la vitesse de rotation du champ magnétique du moteur (comme il s'agit d'une machine synchrone, elle est égale à la vitesse de rotation du rotor multipliée par le nombre de pairs de pôles du moteur) (en rad/s),
- $\phi_f$ représente le flux généré par les aimants du rotor (en Wb).

Dans le cas simple d'une machine à poles lisses, le couple que fournit le moteur électrique est proportionnel au courant $I_q$. Ainsi le courant $I_d$ ne produit que des pertes joules.

Or, une contrainte liée à l'application des tensions via un onduleur s'exprime ainsi :

$$\sqrt{V_d^2 + V_q^2} \leq \frac{U_{bat}}{\sqrt{3}}$$

Pour maintenir le courant $I_d$ le plus proche de zéro, il peut être utile d'appliquer une tension élevée aux bornes de la batterie de traction 1, ce qui est possible grâce à la présente invention.

La présente invention n'est nullement limitée au mode de réalisation décrit et représenté, mais l'homme du métier saura y apporter toute variante conforme à son esprit.

En variante, on pourra prévoir que chaque cellule-composite comporte non pas deux cellules, mais deux branches identiques composées chacune d'un ensemble de cellules connectées en série les unes avec les autres. Alors, les moyens de connexion seront adaptés à connecter les deux branches en série ou en parallèle.

Cette variante de réalisation de la batterie de traction sera, du fait du nombre réduit d'interrupteurs utilisés, moins onéreuse. Le pilotage de la tension aux bornes de la batterie de traction sera en revanche moins fin.

## Revendications

1.　Batterie d'accumulateurs (1) comportant une pluralité de cellules (11, 12, 21, 22, 31, 32) de stockage d'énergie électrique et un réseau électrique (5) qui connecte lesdites cellules (11, 12, 21, 22, 31, 32) les unes aux autres, dans laquelle lesdites cellules (11, 12, 21, 22, 31, 32) étant regroupées par cellules-composites (10, 20, 30) d'un nombre pair de cellules et lesdites cellules-composites étant connectées en série les unes avec les autres, le réseau électrique (5) comporte :

- des moyens de connexion (52) des cellules (11, 12, 21, 22, 31, 32) de chaque cellule-composite (10, 20, 30) en parallèle et en série, **caractérisé en ce qu'**il comporte en outre
- des moyens d'acquisition d'au moins un paramètre de fonctionnement d'un chargeur de batterie ou d'un moteur électrique connecté à la batterie d'accumulateurs (1),
- des moyens de déduction d'une tension optimale à délivrer aux bornes de la batterie d'accumulateurs (1) en fonction du paramètre de fonctionnement acquis de manière à optimiser le rendement du chargeur ou du moteur quels que soient les états de charge des cellules, et
- des moyens de pilotage (57) desdits moyens de connexion (52), qui sont adaptés à connecter les cellules (11, 12, 21, 22, 31, 32) de chaque cellule-composite (10, 20, 30) en parallèle ou en série en fonction de ladite tension optimale déduite précédemment par les moyens de déduction.

2.　Batterie d'accumulateurs (1) selon la revendication précédente, dans laquelle lesdits moyens de connexion comportent, dans chaque cellule-composite (10, 20, 30), trois interrupteurs.

3. Batterie d'accumulateurs (1) selon l'une des revendications 1 et 2, dans laquelle chaque cellule-composite (10, 20, 30) comporte deux branches parallèles composées chacune d'au moins une cellule.

4. Batterie d'accumulateurs (1) selon la revendication précédente, dans laquelle les moyens de connexion sont adaptés à connecter les deux branches en série ou en parallèle.

5. Batterie d'accumulateurs (1) selon l'une des revendications précédentes, dans laquelle les cellules-composites (10, 20, 30) sont toutes identiques.

6. Batterie d'accumulateurs (1) selon l'une des revendications précédentes, dans laquelle le réseau électrique (5) comporte des moyens d'acquisition (54) de la tension et/ou de l'état de charge et/ou de la capacité de chaque cellule-composite (10, 20, 30) et/ou de chaque cellule (11, 12, 21, 22, 31, 32).

7. Batterie d'accumulateurs (1) selon l'une des revendications précédentes, dans laquelle il est prévu un boîtier externe (4) duquel émergent deux bornes de connexion (2, 3) et dans laquelle les cellules-composites (10, 20, 30) sont connectées en série entre lesdites deux bornes de connexion (2, 3).

8. Procédé de pilotage des moyens de connexion (52) d'une batterie d'accumulateurs (1) selon la revendication 6, comportant des étapes :

    - d'acquisition d'au moins un paramètre de fonctionnement d'un chargeur de batterie ou d'un moteur électrique connecté à la batterie d'accumulateurs (1),
    - de déduction, en fonction dudit paramètre de fonctionnement, d'une tension optimale à délivrer aux bornes de la batterie d'accumulateurs (1) de manière à optimiser le rendement du chargeur ou du moteur quels que soient les états de charge des cellules,
    - d'acquisition des tensions instantanées aux bornes de chaque cellule-composite (10, 20, 30) et/ou de chaque cellule (11, 12, 21, 22, 31, 32) de la batterie d'accumulateurs (1),
    - de déduction, en fonction des tensions instantanées acquises, d'un paramètre d'état de charge de chaque cellule-composite (10, 20, 30),
    - de déduction, en fonction de la tension optimale déduite précédemment et des tensions instantanées acquises, du nombre « k » de cellules-composites où les cellules doivent être connectées en série pour que la tension aux bornes de la batterie d'accumulateurs soit sensiblement égale à la tension optimale déduite précédemment,
    - de détermination des « k » cellules-composites (10, 20, 30) dont les paramètres d'état de charge sont les plus grands dans le cas d'une décharge de la batterie d'accumulateurs (1) ou les plus petits dans le cas d'une charge de la batterie d'accumulateurs (1),
    - de pilotage des moyens de connexion (52) de ces « k » cellules-composites (10, 20, 30) de manière à connecter leurs cellules (11, 12, 21, 22, 31, 32) en série, et
    - de pilotage des moyens de connexion (52) des cellules-composites restantes de manière à connecter leurs cellules (11, 12, 21, 22, 31, 32) en parallèle.

9. Procédé de pilotage selon la revendication précédente, dans laquelle à l'étape de déduction de la tension optimale, on recherche dans un registre de base de données dont chaque enregistrement associe une valeur déterminée dudit paramètre de fonctionnement à une tension optimale, un enregistrement correspondant au paramètre de fonctionnement acquis et on y lit la tension optimale associée.

**Patentansprüche**

1. Akkubatterie (1), umfassend eine Vielzahl von Zellen (11, 12, 21, 22, 31, 32) zur Speicherung von elektrischer Energie und ein elektrisches Netz (5), das die Zellen (11, 12, 21, 22, 31, 32) miteinander verbindet, wobei die Zellen (11, 12, 21, 22, 31, 32) zu Verbundzellen (10, 20, 30) einer geraden Anzahl von Zellen zusammengefasst sind, wobei die Verbundzellen in Serie aneinander angeschlossen sind, wobei das elektrische Netz (5) umfasst:

    - Anschlussmittel (52) der Zellen (11, 12, 21, 22, 31, 32) jeder Verbundzelle (10, 20, 30) parallel und in Serie,
    **dadurch gekennzeichnet, dass** es ferner umfasst:
    - Mittel zur Erfassung mindestens eines Funktionsparameters eines Batterieladers oder eines Elektromotors, der an die Akkubatterie (1) angeschlossen ist,
    - Mittel zur Ableitung einer optimalen Spannung, die an die Klemmen der Akkubatterie (1) in Abhängigkeit von dem erfassten Funktionsparameter zu liefern ist, um die Leistung des Laders oder des Motors unabhängig von den Ladezuständen der Zellen zu optimieren, und
    - Steuermittel (57) der Anschlussmittel (52), die geeignet sind, die Zellen (11, 12, 21, 22, 31, 32) jeder Verbundzelle (10, 20, 30) parallel oder in Serie in Abhängigkeit von der vorher durch die Ableitungsmittel abgeleiteten optimalen Spannung anzuschließen.

2. Akkubatterie (1) nach dem vorhergehenden Anspruch, bei der die Anschlussmittel in jeder Verbundzelle (10, 20, 30) drei Schalter umfassen.

3. Akkubatterie (1) nach einem der Ansprüche 1 und 2, bei der jede Verbundzelle (10, 20, 30) zwei parallele Schenkel umfasst, die jeweils aus mindestens einer Zelle zusammengesetzt sind.

4. Akkubatterie (1) nach dem vorhergehenden Anspruch, bei der die Anschlussmittel geeignet sind, die zwei Schenkel in Serie oder parallel anzuschließen.

5. Akkubatterie (1) nach einem der vorhergehenden Ansprüche, bei der die Verbundzellen (10, 20, 30) alle identisch sind.

6. Akkubatterie (1) nach einem der vorhergehenden Ansprüche, bei der das elektrische Netz (5) Mittel (54) zur Erfassung der Spannung und/oder des Ladezustands und/oder der Kapazität jeder Verbundzelle (10, 20, 30) und/oder jeder Zelle (11, 12, 21, 22, 31, 32) umfasst.

7. Akkubatterie (1) nach einem der vorhergehenden Ansprüche, bei der ein externes Gehäuse (4) vorgesehen ist, aus dem zwei Anschlussklemmen (2, 3) herausragen, und bei der die Verbundzellen (10, 20, 30) in Serie zwischen den zwei Anschlussklemmen (2, 3) angeschlossen sind.

8. Verfahren zur Steuerung der Anschlussmittel (52) einer Akkubatterie (1) nach Anspruch 6, umfassend die folgenden Schritte:

   - Erfassung mindestens eines Funktionsparameters eines Batterieladers oder eines Elektromotors, der an die Akkubatterie (1) angeschlossen ist,
   - in Abhängigkeit von dem Funktionsparameter, Ableitung einer optimalen Spannung, die an die Klemmen der Akkubatterie (1) zu liefern ist, um die Leistung des Laders oder des Motors unabhängig von den Ladezuständen der Zellen zu optimieren,
   - Erfassung der momentanen Spannungen an den Klemmen jeder Verbundzelle (10, 20, 30) und/oder jeder Zelle (11, 12, 21, 22, 31, 32) der Akkubatterie (1),
   - in Abhängigkeit von den erfassten momentanen Spannungen, Ableitung eines Parameters eines Ladezustands jeder Verbundzelle (10, 20, 30),
   - in Abhängigkeit von der vorher abgeleiteten optimalen Spannung und den erfassten momentanen Spannungen, Ableitung der Anzahl "k" von Verbundzellen, bei der die Zellen in Serie anzuschließen sind, so dass die Spannung an den Klemmen der Akkubatterie im Wesentlichen gleich der vorher abgeleiteten optimalen Spannung ist,
   - Bestimmung der "k" Verbundzellen (10, 20, 30), deren Ladezustandsparameter im Falle einer Entladung der Akkubatterie (1) am größten sind oder im Falle eines Ladens der Akkubatterie (1) am kleinsten sind,
   - Steuerung der Anschlussmittel (52) dieser "k" Verbundzellen (10, 20, 30), um ihre Zellen (11, 12, 21, 22, 31, 32) in Serie anzuschließen, und
   - Steuerung der Anschlussmittel (52) der übrigen Verbundzellen, um ihre Zellen (11, 12, 21, 22, 31, 32) parallel anzuschließen.

9. Steuerungsverfahren nach dem vorhergehenden Anspruch, bei dem in dem Schritt der Ableitung der optimalen Spannung in einem Datenbasisregister, in dem jede Eintragung einen bestimmten Wert des Funktionsparameters einer optimalen Spannung zuordnet, eine Eintragung gesucht wird, die dem erfassten Funktionsparameter entspricht, und daraus die zugehörige optimale Spannung entnommen wird.

## Claims

1. Accumulator battery (1) comprising a plurality of electrical energy storage cells (11, 12, 21, 22, 31, 32) and an electrical network (5) which connects said cells (11, 12, 21, 22, 31, 32) to one another, in which, said cells (11, 12, 21, 22, 31, 32) being grouped together as composite cells (10, 20, 30) of an even number of cells and said composite cells being connected in series with one another, the electrical network (5) comprises:

   - means of connection (52) of the cells (11, 12, 21, 22, 31, 32) of each composite cell (10, 20, 30) in parallel and in series,

   **characterized in that** it further comprises

   - acquisition means for acquiring at least one operating parameter of a battery charger or of an electric motor connected to the accumulator battery (1),
   - means for deducing an optimal voltage to be delivered across the terminals of the accumulator battery (1) as a function of the operating parameter acquired in such a way as to optimize the efficiency of the charger or of the motor regardless of the states of charge of the cells, and

- means (57) for controlling said means of connection (52), which are suitable for connecting the cells (11, 12, 21, 22, 31, 32) of each composite cell (10, 20, 30) in parallel or in series as a function of said optimal voltage previously deduced by the deduction means.

2. Accumulator battery (1) according to the preceding claim, in which said means of connection comprise, in each composite cell (10, 20, 30), three breaker switches.

3. Accumulator battery (1) according to one of Claims 1 and 2, in which each composite cell (10, 20, 30) comprises two parallel branches each composed of at least one cell.

4. Accumulator battery (1) according to the preceding claim, in which the means of connection are suitable for connecting the two branches in series or in parallel.

5. Accumulator battery (1) according to one of the preceding claims, in which the composite cells (10, 20, 30) are all identical.

6. Accumulator battery (1) according to one of the preceding claims, in which the electrical network (5) comprises means (54) for acquiring the voltage and/or the state of charge and/or the capacity of each composite cell (10, 20, 30) and/or of each cell (11, 12, 21, 22, 31, 32).

7. Accumulator battery (1) according to one of the preceding claims, in which there is provided an external casing (4) from which there emerge two connection terminals (2, 3) and in which battery the composite cells (10, 20, 30) are connected in series between said two connection terminals (2, 3).

8. Method for controlling the means of connection (52) of an accumulator battery (1) according to Claim 6, comprising steps:

   - of acquiring at least one operating parameter of a battery charger or of an electric motor connected to the accumulator battery (1),
   - of deducing, as a function of said operating parameter, an optimal voltage to be delivered across the terminals of the accumulator battery (1) in such a way as to optimize the efficiency of the charger or of the motor regardless of the states of charge of the cells,
   - of acquiring the instantaneous voltages across the terminals of each composite cell (10, 20, 30) and/or of each cell (11, 12, 21, 22, 31, 32) of the accumulator battery (1),
   - of deducing, as a function of the instantaneous voltages acquired, a state of charge parameter of each composite cell (10, 20, 30),
   - of deducing, as a function of the optimal voltage previously deduced and of the instantaneous voltages acquired, the number "k" of composite cells where the cells must be connected in series so that the voltage across the terminals of the accumulator battery is substantially equal to the optimal voltage previously deduced,
   - of determining the "k" composite cells (10, 20, 30) whose state of charge parameters are the largest in the case of a discharging of the accumulator battery (1) or the smallest in the case of a charging of the accumulator battery (1),
   - of controlling the means of connection (52) of these "k" composite cells (10, 20, 30) so as to connect their cells (11, 12, 21, 22, 31, 32) in series, and
   - of controlling the means of connection (52) of the remaining composite cells so as to connect their cells (11, 12, 21, 22, 31, 32) in parallel.

9. Controlling method according to the preceding claim, in which in the step of deducing the optimal voltage, a search is undertaken in a database register, each record of which associates a determined value of said operating parameter with an optimal voltage, for a record corresponding to the operating parameter acquired and the associated optimal voltage is read therefrom.

Fig.1

# Fig.2

# Fig.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011132302 A

- FR 2964510